# EUROPÄISCHE PATENTSCHRIFT

(11) **EP 3 484 659 B1**
(45) Veröffentlichungstag und Bekanntmachung des Hinweises auf die Patenterteilung: **24.04.2024**
(21) Anmeldenummer: 17736932.9
(22) Anmeldetag: 05.07.2017
(51) Int. Cl.: B23Q 1/00

(54) **SPANNVORRICHTUNG**
CLAMPING DEVICE
DISPOSITIF DE SERRAGE

(30) Priorität: 12.07.2016 DE 102016112770
(43) Veröffentlichungstag der Anmeldung: 22.05.2019
(73) Patentinhaber: Andreas Maier GmbH & Co. KG, 70734 Fellbach (DE)
(72) Erfinder: GÖBEL, Volker, 70563 Stuttgart (DE); DIETTERLE, Martin, 71384 Weinstadt (DE)
(74) Vertreter: Hoeger, Stellrecht & Partner Patentanwälte mbB
(86) Internationale Anmeldenummer: PCT/EP2017/066821
(87) Internationale Veröffentlichungsnummer: WO 2018/011038

(56) Entgegenhaltungen:
- EP-A1- 1 078 713
- DE-A1- 4 204 828
- US-A1- 2005 056 985

## Beschreibung

Die vorliegende Erfindung betrifft eine Spannvorrichtung zum Einspannen eines Wechselkörpers an einem Grundkörper, wobei die Spannvorrichtung mindestens eine Arretiervorrichtung zum Arretieren einer an dem Wechselkörper angeordneten Spannhülse relativ zu dem Grundkörper umfasst und wobei die Arretiervorrichtung ein Gehäuse, einen in dem Gehäuse zwischen einer Spannstellung und einer Freigabestellung beweglich geführten Spannkolben und mindestens einen Arretierkörper umfasst, der mittels des Spannkolbens von einer Freigabeposition, in welcher der Arretierkörper ein Wegbewegen der Spannhülse von dem Grundkörper freigibt, in eine Arretierposition, in welcher der Arretierkörper ein Wegbewegen der Spannhülse von dem Grundkörper verhindert, bewegbar ist.

Bei bekannten Spannvorrichtungen dieser Art wird ein Spannkolben mittels einer Schraubbewegung, die unter Verwendung eines Schraubwerkzeugs erzeugt wird, von der Spannstellung in die Freigabestellung bewegt.

Ferner sind Spannvorrichtungen bekannt, bei denen ein Spannkolben mit einem unter Druck stehenden Fluid, beispielsweise mit Druckluft oder mit einem Hydrauliköl, beaufschlagbar ist, um den Spannkolben von der Spannstellung in die Freigabestellung zu bewegen.

Solche Spannvorrichtungen sind wegen der Notwendigkeit der Zufuhr und Abfuhr des unter Druck stehenden Fluids aufwendig aufgebaut und können nur dort betrieben werden, wo ein solches unter Druck stehendes Fluid verfügbar ist.

Die EP 1 078 713 A1 offenbart eine Spannvorrichtung zum Einspannen eines Wechselkörpers an einem Grundkörper der Spannvorrichtung, wobei die Spannvorrichtung eine Arretiervorrichtung zum Arretieren einer an dem Wechselkörper angeordneten Spannhülse relativ zu dem Grundkörper umfasst, wobei die Arretiervorrichtung ein Gehäuse, einen in dem Gehäuse zwischen einer Spannstellung und einer Freigabestellung beweglich geführten Spannkolben und mehrere Arretierkörper umfasst, die mittels des Spannkolbens von einer Freigabeposition, in welcher die Arretierkörper ein Wegbewegen der Spannhülse von dem Grundkörper freigeben, in eine Arretierposition, in welcher die Arretierkörper ein Wegbewegen der Spannhülse von dem Grundkörper verhindern, bewegbar sind, wobei der Spannkolben mit einem Betätigungselement gekoppelt ist, das durch Einwirkung eines von außerhalb des Gehäuses der Arretiervorrichtung zugeführten Drucköls mit einer Betätigungskraft beaufschlagbar ist, durch deren Einwirkung auf das Betätigungselement der Spannkolben von der Spannstellung in die Freigabestellung verschiebbar ist und wobei das Gehäuse der Arretiervorrichtung unverlierbar an dem Grundkörper gehalten ist.

Die DE 42 04 828 A1 offenbart eine Spannvorrichtung gemäß dem Oberbegriff von Anspruch 1.

Der vorliegenden Erfindung liegt die Aufgabe zugrunde, eine Spannvorrichtung der eingangs genannten Art zu schaffen, welche einfach aufgebaut und betätigbar ist und dennoch eine zuverlässige Arretierung der Spannhülse mit hoher Haltekraft ermöglicht.

Diese Aufgabe wird durch eine Spannvorrichtung nach Anspruch 1 gelöst.

Der vorliegenden Erfindung liegt das Konzept zugrunde, den Spannkolben durch Einwirkung einer mechanischen Druckkraft oder einer mechanischen Zugkraft auf ein von außerhalb des Gehäuses der Arretiervorrichtung zugängliches Betätigungselement von der Spannstellung in die Freigabestellung zu verschieben.

Dabei kann die Betätigung des Betätigungselements insbesondere mechanisch von Hand erfolgen, beispielsweise dadurch, dass eine Bedienungsperson mit einem Finger einen Druck auf das Betätigungselement ausübt.

Alternativ hierzu kann die Beaufschlagung des Betätigungselements mit einer Betätigungskraft auch mittels einer Maschine, die eine mechanische Kraft auf das Betätigungselement überträgt, erfolgen, beispielsweise mittels eines Roboters.

Bei einer bevorzugten Ausgestaltung der Erfindung ist vorgesehen, dass das Betätigungselement eine Betätigungsfläche aufweist, wobei durch Ausüben eines Druckes von außerhalb des Gehäuses der Arretiervorrichtung auf die Betätigungsfläche der Spannkolben von der Spannstellung in die Freigabestellung verschiebbar ist.

Der mindestens eine Arretierkörper ist vorzugsweise zwischen der Betätigungsfläche des Betätigungselements und einer Spannfläche des Grundkörpers, an welcher der Wechselkörper im eingespannten Zustand anliegt, angeordnet.

Besonders einfach verwendbar ist die erfindungsgemäße Spannvorrichtung, wenn der Spannkolben mittels des Betätigungselements werkzeugfrei von der Spannstellung in die Freigabestellung verschiebbar ist.

Insbesondere ist es günstig, wenn für die Verschiebung des Spannkolbens von der Spannstellung in die Freigabestellung kein Schraubwerkzeug benötigt wird.

Bei einer bevorzugten Ausgestaltung der Erfindung ist vorgesehen, dass der Spannkolben mittels des Betätigungselements im Wesentlichen geradlinig von der Spannstellung in die Freigabestellung verschiebbar ist.

Das Betätigungselement kann eine, vorzugsweise im Wesentlichen ebene, Anlagefläche aufweisen, mit welcher das Betätigungselement an dem Gehäuse der Arretiervorrichtung anliegt, wenn der Spannkolben sich in der Freigabestellung befindet.

Um den Spannkolben in einfacher Weise von der Freigabestellung zurück in die Spannstellung zu bewegen, kann vorgesehen sein, dass die Arretiervorrichtung ein elastisches Element umfasst, welches den Spannkolben in die Spannstellung vorspannt.

Ein solches elastisches Element kann insbesondere ein Federelement, beispielsweise eine Druck-Schraubenfeder, umfassen.

Als Widerlager für das elastische Element kann die Arretiervorrichtung ein Abstützelement umfassen, an welchem das elastische Element sich abstützt, insbesondere mit einem dem Spannkolben abgewandten Ende.

Ferner kann die Arretiervorrichtung ein Rückhalteelement umfassen, welches das elastische Element und/oder das Abstützelement in dem Gehäuse der Arretiervorrichtung zurückhält.

Bei einer bevorzugten Ausgestaltung der Erfindung ist vorgesehen, dass das Betätigungselement in der Spannstellung und/oder in der Freigabestellung des Spannkolbens zumindest teilweise, vorzugsweise vollständig, außerhalb des Gehäuses der Arretiervorrichtung angeordnet ist.

Das Betätigungselement kann einstückig mit dem Spannkolben ausgebildet oder unlösbar an dem Spannkolben festgelegt sein.

Bei einer bevorzugten Ausgestaltung der Erfindung ist vorgesehen, dass das Betätigungselement lösbar an dem Spannkolben gehalten ist.

Insbesondere kann vorgesehen sein, dass das Betätigungselement mit dem Spannkolben verschraubt oder verrastet ist.

Das Gehäuse der Arretiervorrichtung ist unverlierbar an dem Grundkörper gehalten.

Ein dem Betätigungselement zugewandter Endbereich des Gehäuses bildet einen Arretierkörperkäfig zur Aufnahme von mehreren Arretierkörpern.

Die erfindungsgemäße Spannvorrichtung eignet sich insbesondere zur Verwendung in einer Kombination aus einer erfindungsgemäßen Spannvorrichtung und einem an dem Grundkörper der Spannvorrichtung einspannbaren Wechselkörper, an dem mindestens eine Spannhülse angeordnet ist.

Dabei kann vorgesehen sein, dass das Betätigungselement mindestens einer Arretiervorrichtung in der zugeordneten Spannhülse verschieblich geführt ist.

Ferner ist es für eine einfache Betätigung der Arretiervorrichtung von Vorteil, wenn das Betätigungselement im eingespannten Zustand des Wechselkörpers über eine dem Grundkörper abgewandte Begrenzungsfläche des Wechselkörpers übersteht, wenn der Spannkolben sich in der Spannstellung befindet.

Um auch bei Vorhandensein mehrerer Arretiervorrichtungen an der Spannvorrichtung ein gleichzeitiges Betätigen aller Arretiervorrichtungen in einfacher Weise zu ermöglichen, kann vorgesehen sein, dass die Kombination mindestens eine Betätigungshilfe umfasst, mittels welcher die Betätigungselemente mehrerer Arretiervorrichtungen gleichzeitig mit einer Betätigungskraft beaufschlagbar sind.

Eine solche Betätigungshilfe kann insbesondere als eine Betätigungsleiste ausgebildet sein.

Die Betätigungshilfe kann einen Kraftaufnahmebereich, welcher eine von einer Bedienungsperson oder einer Maschine ausgeübte Betätigungskraft aufnimmt, und/oder einen Betätigungsbereich, an welchem die Betätigungshilfe eine Betätigungskraft auf ein Betätigungselement einer Arretiervorrichtung oder auf mehrere Betätigungselemente verschiedener Arretiervorrichtungen überträgt, aufweisen.

Um die Betätigungshilfe jederzeit für eine Betätigung der Arretiervorrichtungen der Spannvorrichtung zur Verfügung zu haben, ist es von Vorteil, wenn die Betätigungshilfe unverlierbar an dem Wechselkörper oder an dem Grundkörper der Spannvorrichtung gehalten ist.

Insbesondere kann vorgesehen sein, dass die Betätigungshilfe, beispielsweise mittels eines Scharniers, an den Wechselkörper oder an den Grundkörper angelenkt ist.

Bei einer bevorzugten Ausgestaltung der Kombination ist vorgesehen, dass die Spannvorrichtung mindestens vier Arretiervorrichtungen umfasst und mindestens zwei Betätigungshilfen vorgesehen sind, mittels welcher jeweils zwei Arretiervorrichtungen betätigbar sind.

Der Wechselkörper kann mit einer oder mehreren Werkstückhalterungen versehen sein, mittels welcher jeweils ein Werkstück an dem Wechselkörper, vorzugsweise lösbar, festlegbar ist.

Das an dem Wechselkörper festgelegte Werkstück kann, insbesondere spanend, bearbeitet werden, während der Wechselkörper an dem Grundkörper eingespannt ist.

Die erfindungsgemäße Spannvorrichtung ermöglicht ein positionsgenaues Einspannen des Wechselkörpers an einer Spannfläche des Grundkörpers, so dass diese Spannvorrichtung als Nullpunktspannvorrichtung ausgebildet und verwendbar ist.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine perspektivische Darstellung einer Kombination aus einer Spannvorrichtung zum Einspannen eines Wechselkörpers an einem Grundkörper, wobei die Spannvorrichtung den Grundkörper und zwei an dem Grundkörper gehaltene Arretiervorrichtungen umfasst und an dem Wechselkörper zwei Spannhülsen angeordnet sind;
- Fig. 2: eine Seitenansicht der Kombination aus Spannvorrichtung und Wechselkörper aus Fig. 1, mit der Blickrichtung in Richtung des Pfeiles 2 in Fig. 1;
- Fig. 3: einen Längsschnitt durch die Kombination aus Spannvorrichtung und Wechselkörper aus den Fig. 1 und 2, längs der Linie 3 - 3 in Fig. 2, wobei bei einer der Arretiervorrichtungen ein Spannkolben sich in einer Freigabestellung befindet, in welcher Arretierkörper der Arretiervorrichtung in eine Freigabeposition der Arretierkörper gelangen können, und bei einer weiteren Arretiervorrichtung der Spannkolben sich in einer Spannstellung befindet, in welcher der Spannkolben die Arretierkörper der Arretiervorrichtung in einer Arretierposition festhält;
- Fig. 4: eine perspektivische Darstellung einer der Arretiervorrichtungen der Kombination aus Spannvorrichtung und Wechselkörper aus den Fig. 1 bis 3;
- Fig. 5: eine Seitenansicht der Arretiervorrichtung aus Fig. 4, in einer Radialrichtung der Arretiervorrichtung gesehen, wobei der Spannkolben der Arretiervorrichtung sich in der Spannstellung befindet;
- Fig. 6: einen Längsschnitt durch die Arretiervorrichtung aus Fig. 5, längs der Linie 6 - 6 in Fig. 5;
- Fig. 7: eine der Fig. 5 entsprechende Seitenansicht der Arretiervorrichtung, wobei der Spannkolben der Arretiervorrichtung sich in der Freigabestellung befindet;
- Fig. 8: einen Längsschnitt durch die Arretiervorrichtung aus Fig. 7, längs der Linie 8 - 8 in Fig. 7; und

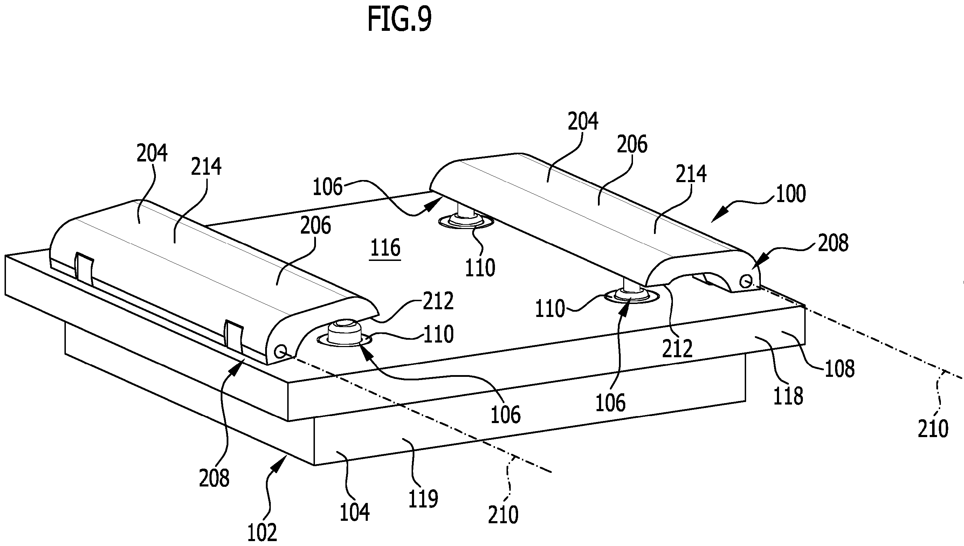

- Fig. 9: eine perspektivische Darstellung einer zweiten Ausführungsform einer Kombination aus Spannvorrichtung und Wechselkörper, wobei die Spannvorrichtung vier Arretiervorrichtungen umfasst und an dem Wechselkörper vier Spannhülsen angeordnet sind, welche jeweils einer der Arretiervorrichtungen der Spannvorrichtung zugeordnet sind, wobei an dem Wechselkörper zwei Betätigungshilfen in Form von Betätigungsleisten angeordnet sind, welche unverlierbar an dem Wechselkörper angelenkt sind und jeweils eine Betätigungskraft auf die Betätigungselemente zweier Arretiervorrichtungen übertragen können, so dass die Spannkolben der betreffenden Arretiervorrichtungen gleichzeitig durch Ausüben einer Betätigungskraft auf die Betätigungshilfe von der Spannstellung in die Freigabestellung überführbar sind.

Gleiche oder funktional äquivalente Elemente sind in allen Figuren mit denselben Bezugszeichen bezeichnet.

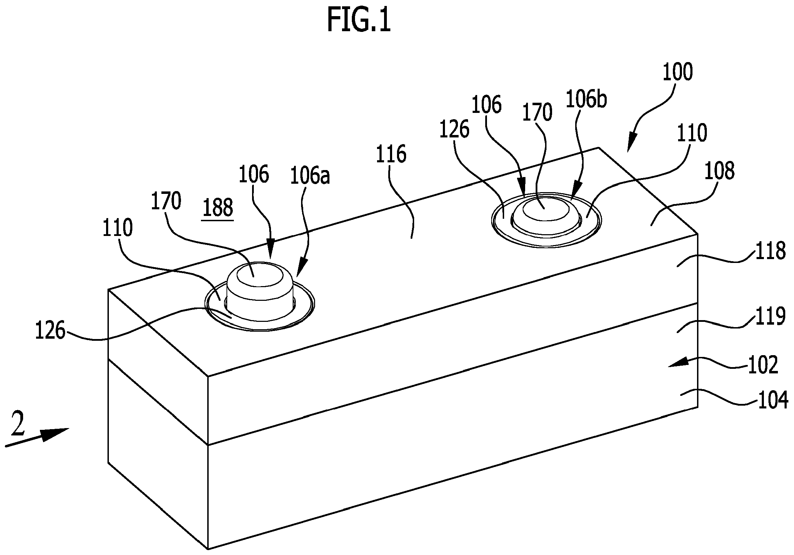

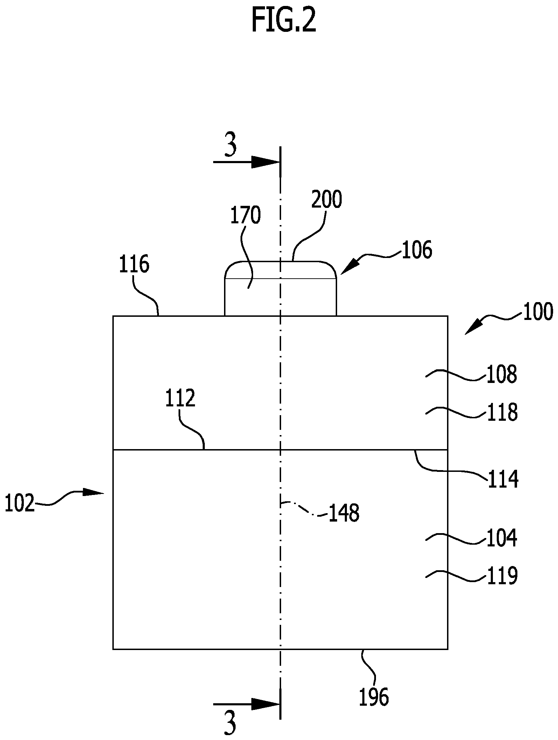

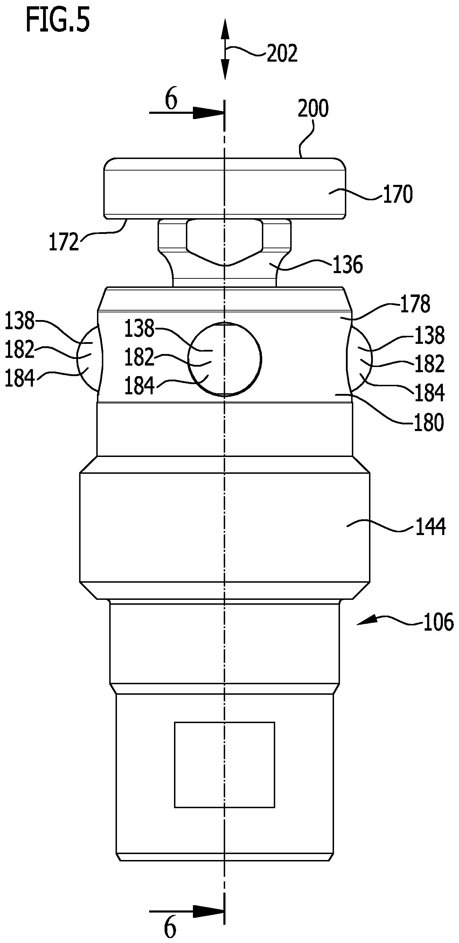

In den Fig. 1 bis 8 ist eine als Ganzes mit 100 bezeichnete Kombination aus einer Spannvorrichtung 102, welche einen Grundkörper 104 und mehrere, beispielsweise zwei, an dem Grundkörper 104 gehaltene Arretiervorrichtungen 106 umfasst, und einem an dem Grundkörper 104 eingespannten Wechselkörper 108, an welchem für jede Arretiervorrichtung 106 jeweils eine der betreffenden Arretiervorrichtung 106 zugeordnete Spannhülse 110 angeordnet ist, dargestellt.

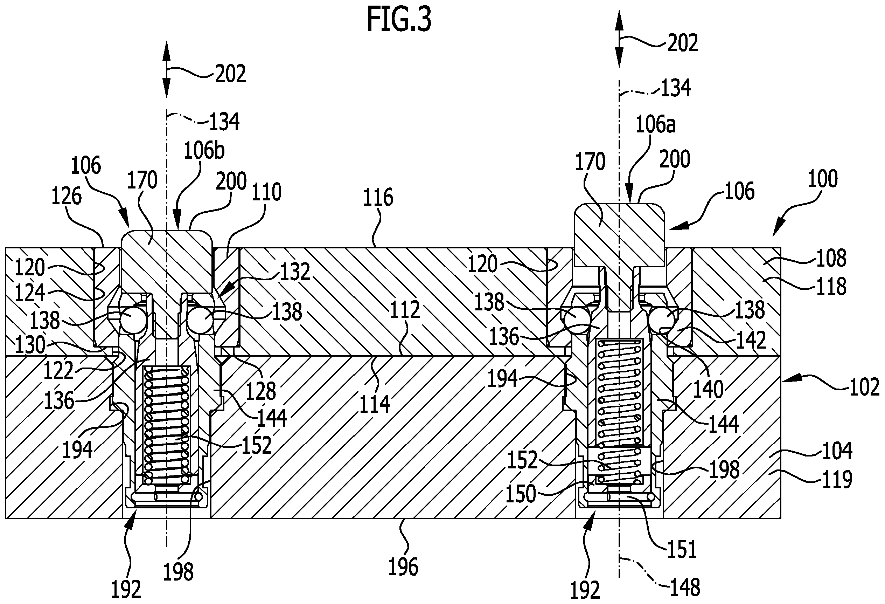

Wie am besten aus Fig. 3 zu ersehen ist, weist der Grundkörper 104 der Spannvorrichtung 102 eine, vorzugsweise im Wesentlichen ebene, Spannfläche 112 auf, an welcher der Wechselkörper 108 im eingespannten Zustand, vorzugsweise im Wesentlichen flächig, mit einer Anlagefläche 114 anliegt.

Ferner weist der Wechselkörper 108 eine der Anlagefläche 114 gegenüberliegende, vorzugsweise im Wesentlichen parallel zu der Anlagefläche 114 ausgerichtete, Begrenzungsfläche 116 auf.

Im Übrigen ist die Form des Wechselkörpers 108 beliebig; der Wechselkörper 108 kann beispielsweise als eine im Wesentlichen quaderförmige Wechselplatte 118 ausgebildet sein.

Auch die Form des Grundkörpers 104 ist beliebig; der Grundkörper 104 kann beispielsweise als eine im Wesentlichen quaderförmige Grundplatte 119 ausgebildet sein.

Der Grundkörper kann an einem Untergrund, beispielsweise an einem Maschinentisch, festgelegt sein, insbesondere lösbar festgelegt sein.

Der Wechselkörper 108 wird quer, vorzugsweise im Wesentlichen senkrecht, zu der Anlagefläche 114 von einer oder mehreren, beispielsweise zwei, Aufnahmebohrungen 120 durchsetzt.

Jede Aufnahmebohrung 120 kann gestuft ausgebildet sein, mit einem an der Spannfläche 112 mündenden Abschnitt 122 geringeren Durchmessers und mit einem an der Begrenzungsfläche 116 mündenden Abschnitt 124 größeren Durchmessers.

In den Abschnitt 124 größeren Durchmessers ist die Spannhülse 110 eingesetzt, und zwar vorzugsweise so, dass eine der Spannfläche 112 zugewandte erste Stirnfläche 126 der Spannhülse 110 im Wesentlichen mit der Begrenzungsfläche 116 fluchtet und eine der Spannfläche 112 zugewandte zweite Stirnfläche 128 der Spannhülse 110 an einer Schulter 130 des Wechselkörpers 108 anliegt, an welcher der Abschnitt 124 größeren Durchmessers in den Abschnitt 122 geringeren Durchmessers der Aufnahmebohrung 120 übergeht.

Die Spannhülse 110 ist im Wesentlichen hohlzylindrisch ausgebildet und weist an ihrer Innenseite eine Aufnahmenut 132 auf, welche eine Längsmittelachse 134 der Spannhülse 110 ringförmig umgibt und welche in einer Spannstellung eines Spannkolbens 136 der jeweils zugeordneten Arretiervorrichtung 106 Arretierkörper 138 der betreffenden Arretiervorrichtung 106 teilweise aufnimmt.

In Fig. 3 befindet sich bei der rechts dargestellten Arretiervorrichtung 106a der Spannkolben 136 in dieser Spannstellung.

Dabei presst der Spannkolben 136 die Arretierkörper 138 gegen eine, vorzugsweise konisch ausgebildete, Andrückfläche 140 an der Innenseite eines Hinterscheidungsabschnitts 142 der Spannhülse 110, welcher zwischen der zweiten Stirnfläche 128 und der Andrückfläche 140 der Spannhülse 110 ausgebildet ist und im eingespannten Zustand des Wechselkörpers 108 die Arretierkörper 138 der jeweils zugeordneten Arretiervorrichtung 106 hintergreift.

Bei der in Fig. 3 links dargestellten Arretiervorrichtung 106b befindet sich der Spannkolben 136 in der Freigabestellung, in welcher der Spannkolben 136 eine Bewegung der Arretierkörper 138 radial einwärts aus der Aufnahmenut 132 der Spannhülse 110 heraus freigibt.

Die Spannhülse 110 ist vorzugsweise durch Stoffschluss, durch Formschluss und/oder durch Kraftschluss, insbesondere Reibschluss, an dem Wechselkörper 108 festgelegt.

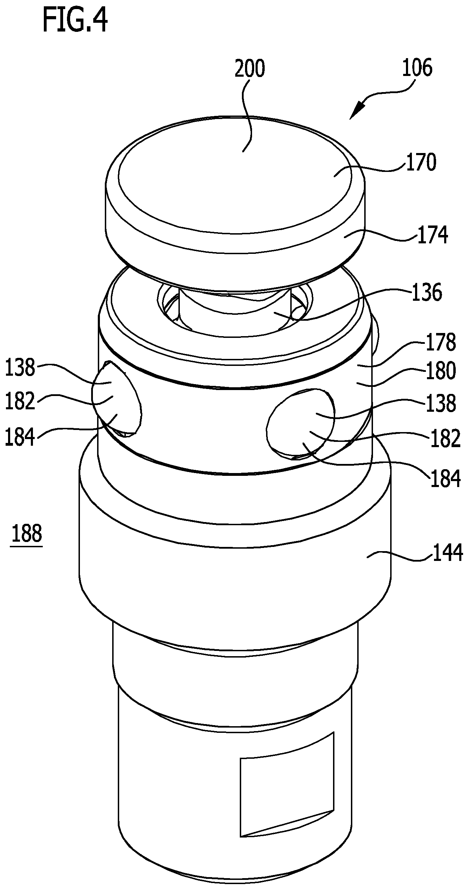

Die mit jeweils einer Spannhülse 110 im eingespannten Zustand des Wechselkörpers 108 zusammenwirkende Arretiervorrichtung 106 ist einzeln in den Fig. 4 bis 8 dargestellt.

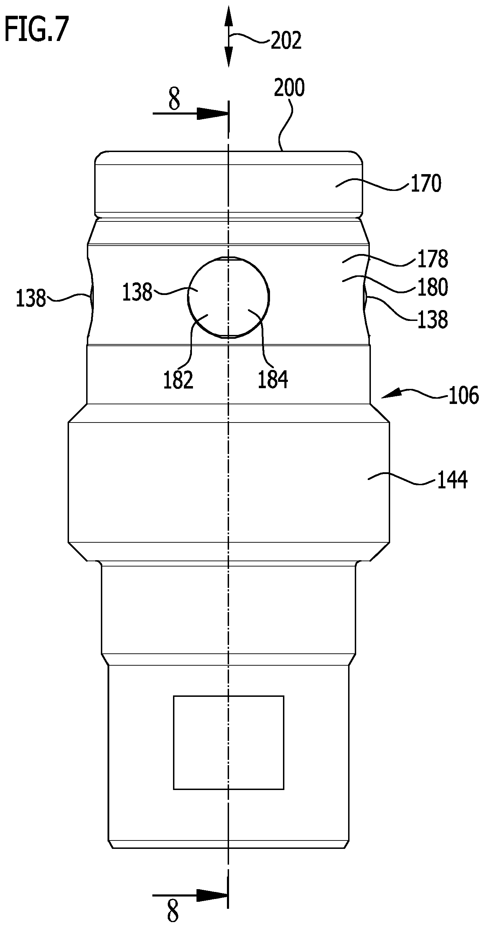

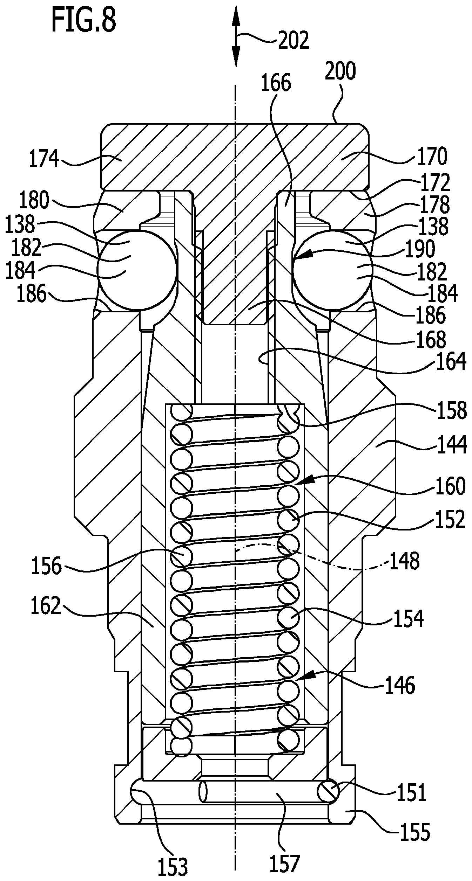

Dabei zeigen die Fig. 4 bis 6 die Arretiervorrichtung 106 mit in der Spannstellung befindlichem Spannkolben 136 und die Fig. 7 und 8 die Arretiervorrichtung 106 mit in der Freigabestellung befindlichem Spannkolben 136.

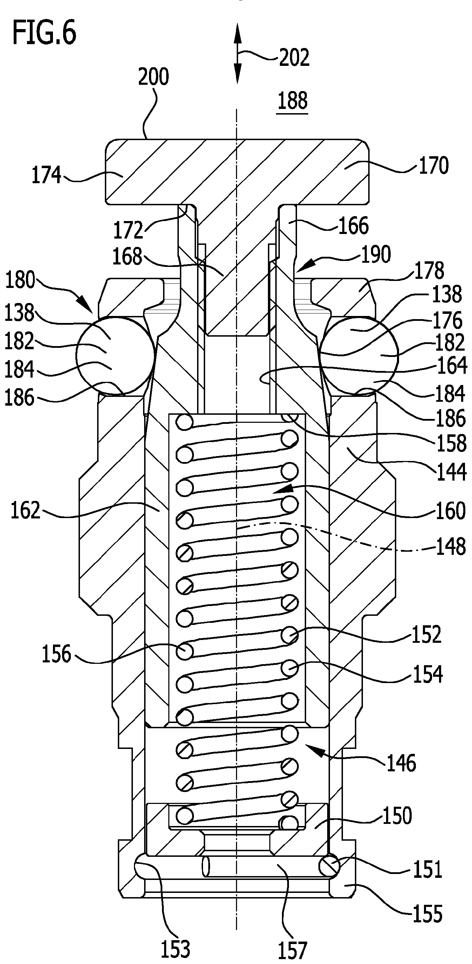

Wie am besten aus den Schnittdarstellungen der Fig. 6 und 8 zu ersehen ist, umfasst die Arretiervorrichtung 106 ein Gehäuse 144. In einem Innenraum 146 des Gehäuses 144 ist der Spannkolben 136 längs einer Längsmittelachse 148 der Arretiervorrichtung 106 axial geradlinig verschieblich geführt.

In dem Innenraum 146 des Gehäuses 144 ist ferner ein Abstützelement 150 angeordnet, an welchem sich ein dem Spannkolben 136 abgewandtes Ende eines elastischen Elements 152 abstützt.

Das elastische Element 152 kann insbesondere als ein Federelement 154, insbesondere als eine Druck-Schraubenfeder 156, ausgebildet sein.

Das Abstützelement 150 wird in dem Innenraum 146 durch ein Rückhalteelement 151 zurückgehalten, welches in einer Ringnut 153 an einem einem Betätigungselement 170 abgewandten Endbereich 155 des Gehäuses 144 der Arretiervorrichtung 106 vorgesehen ist.

Das Rückhalteelement 151 steht aus der Ringnut 153 in den Innenraum 146 des Gehäuses 144 vor und bildet so einen Anschlag für das Abstützelement 150, welches ein Herausbewegen des Abstützelements 150 aus dem Innenraum 146 des Gehäuses 144 verhindert.

Das Rückhalteelement 151 kann beispielsweise als ein Federring 157 ausgebildet sein.

Ein dem Abstützelement 150 abgewandtes weiteres Ende des elastischen Elements 152 stützt sich an einer Stirnwand 158 eines Aufnahmeraums 160 ab, welcher in einem dem Abstützelement 150 zugewandten Endbereich 162 des Spannkolbens 136 ausgebildet ist.

Von dem Aufnahmeraum 160 erstreckt sich eine Gewindebohrung 164 durch einen dem Abstützelement 150 abgewandten weiteren Endbereich 166 des Spannkolbens 136.

In diese Gewindebohrung 164 ist ein Gewindeabschnitt 168 des, beispielsweise schraubenförmig ausgebildeten, Betätigungselements 170 der Arretiervorrichtung 106 eingeschraubt.

Das Betätigungselement 170 liegt mit einer dem Spannkolben 136 zugewandten Anlagefläche 172 eines Kopfes 174 des Betätigungselements 170 an dem Endbereich 166 des Spannkolbens 136, vorzugsweise im Wesentlichen flächig, an.

Hierdurch ist das Betätigungselement 170 formschlüssig mit dem Spannkolben 136 gekoppelt.

Alternativ oder ergänzend hierzu kann auch vorgesehen sein, dass das Betätigungselement 170 in anderer Weise durch Formschluss, durch Stoffschluss und/oder durch Kraftschluss, insbesondere durch Reibschluss, mit dem Spannkolben 136 gekoppelt ist.

Ferner kann auch vorgesehen sein, dass das Betätigungselement 170 einstückig mit dem Spannkolben 136 ausgebildet ist.

Durch die Rückstellkraft des elastischen Elements 152, das sich einerseits an dem Abstützelement 150 und andererseits an dem Spannkolben 136 abstützt, wird der Spannkolben 136 in die in den Fig. 4 bis 6 dargestellte Spannstellung vorgespannt, in welcher der Spannkolben 136 mit einer - beispielsweise im Wesentlichen konisch ausgebildeten - Spannschulter 176 die Arretierkörper 138 der Arretiervorrichtung 106 in radialer Richtung von der Längsmittelachse 148 der Arretiervorrichtung 106 weg in die in den Fig. 4 bis 6 dargestellte Arretierposition drückt, in welcher die Arretierkörper 138 ihren maximalen Abstand von der Längsmittelachse 148 der Arretiervorrichtung 106 aufweisen.

Ein dem Betätigungselement 170 zugewandter Endbereich 178 des Gehäuses 144 der Arretiervorrichtung 106 bildet einen Arretierkörperkäfig 180 zur Aufnahme von mehreren, beispielsweise vier, in der Umfangsrichtung des Gehäuses 144 - vorzugsweise im Wesentlichen äquidistant - voneinander beabstandeten Arretierkörpern 138.

Die Arretierkörper 138 sind vorzugsweise als Wälzkörper 182, insbesondere als Arretierkugeln 184, ausgebildet.

Jeder der Arretierkörper 138 steht im Eingriff mit jeweils einer zugeordneten Arretierkörperbohrung 186, welche das Gehäuse 144 in im Wesentlichen radialer Richtung durchsetzt und sich mit wachsendem Abstand von der Längsmittelachse 148 der Arretiervorrichtung 106 verjüngt, so dass die Arretierkörper 138 sich nicht durch das radial äußere Ende der jeweils zugeordneten Arretierkörperbohrung 186 hinaus in den Außenraum 188 der Arretiervorrichtung 106 bewegen können, sondern unverlierbar mit dem Gehäuse 144 der Arretiervorrichtung 106 verbunden sind.

In der in den Fig. 4 bis 6 dargestellten Spannstellung des Spannkolbens 136 werden die Arretierkörper 138 von der Spannschulter 176 des Spannkolbens 136 in ihre Arretierposition gedrückt, in welcher die Arretierkörper 138 den maximalen Abstand von der Längsmittelachse 148 der Arretiervorrichtung 106 aufweisen und maximal über die Außenwand des Gehäuses 144 in den Außenraum 188 der Arretiervorrichtung 106 überstehen.

Zwischen der Spannschulter 176 des Spannkolbens 136 und dem Betätigungselement 170 ist ein verjüngter Abschnitt 190 des Spannkolbens 136 angeordnet, welcher einen geringeren Durchmesser aufweist als die Spannschulter 176, so dass die Arretierkörper 138 in der in den Fig. 7 und 8 dargestellten Freigabestellung des Spannkolbens 136, in welcher der verjüngte Abschnitt 190 des Spannkolbens 136 sich auf der Höhe der Arretierkörper 138 befindet, sich maximal radial nach innen zu der Längsmittelachse 148 der Arretiervorrichtung 106 hin bewegen können und in dieser Freigabeposition minimal oder gar nicht über die Außenwand des Gehäuses 144 der Arretiervorrichtung 106 überstehen.

Wie am besten aus Fig. 3 zu ersehen ist, ist jede Arretiervorrichtung 106 in eine Aufnahmebohrung 192 des Grundkörpers 104 der Spannvorrichtung 102 eingesetzt.

Jede Aufnahmebohrung 192 ist vorzugsweise gestuft ausgebildet und kann insbesondere einen an der Spannfläche 112 des Grundkörpers 104 mündenden Abschnitt 194 größeren Durchmessers und einen an einer der Spannfläche 112 des Grundkörpers 104 abgewandten und vorzugsweise im Wesentlichen parallel zu der Spannfläche 112 ausgerichteten Begrenzungsfläche 196 des Grundkörpers 104 mündenden Abschnitt 198 geringeren Durchmessers aufweisen.

Das Gehäuse 144 jeder Arretiervorrichtung 106 ist vorzugsweise unverlierbar an dem Grundkörper 104 gehalten und kann beispielsweise durch Formschluss, durch Stoffschluss und/oder durch Kraftschluss, insbesondere durch Reibschluss, an dem Grundkörper 104 festgelegt sein.

Mittels der vorstehend beschriebenen Spannvorrichtung 102 wird ein Wechselkörper 108 wie folgt an der Spannfläche 112 des Grundkörpers 104 eingespannt:

Wenn der Wechselkörper 108 von dem Grundkörper 104 abgenommen ist und keine Betätigungskraft auf die Betätigungselemente 170 der Arretiervorrichtungen 106 der Spannvorrichtung 102 ausgeübt wird, werden die Spannkolben 136 der Arretiervorrichtungen 106 durch die elastischen Elemente 152 in die Spannstellung vorgespannt, welche in den Fig. 4 bis 6 dargestellt ist und in welcher jeder Spannkolben 136 die zugeordneten Arretierkörper 138 in der Arretierposition hält.

Der Wechselkörper 108 wird so auf die Arretiervorrichtungen 106 der Spannvorrichtung 102 aufgesetzt, dass die Betätigungselemente 170 der Arretiervorrichtung 106 sich durch die Spannhülsen 110, die an dem Wechselkörper 108 angeordnet sind, hindurch erstrecken und vorzugsweise über die Begrenzungsfläche 116 des Wechselkörpers 108 überstehen.

In diesem Zustand liegt der Wechselkörper 108 vorzugsweise mit seiner Anlagefläche 114 an den sich in der Arretierposition befindlichen Arretierkörpern 138 der Arretiervorrichtungen 106 an.

Die Anlagefläche 114 ist in diesem Zustand von der Spannfläche 112 des Grundkörpers 104 beabstandet.

Um den Wechselkörper 108 nun an der Spannfläche 112 einzuspannen, übt eine Bedienungsperson, beispielsweise mit jeweils einem Finger derselben Hand oder mit jeweils einem Finger verschiedener Hände, eine mechanische Betätigungskraft auf die dem elastischen Element 152 abgewandte Betätigungsfläche 200 des betreffenden Betätigungselements 170 aus, wobei die Betätigungskraft jeweils parallel zur Längsmittelachse 148 der Arretiervorrichtung 106 zu dem elastischen Element 152 hin gerichtet ist, so dass das Betätigungselement 170 und der damit verbundene Spannkolben 136 unter Einwirkung der Betätigungskraft, gegen die Rückstellkraft des jeweiligen elastischen Elements 152, in einer parallel zur Längsmittelachse 148 gerichteten Verschiebungsrichtung 202, vorzugsweise im Wesentlichen geradlinig, von der in den Fig. 4 bis 6 und in Fig. 3 rechts dargestellten Spannstellung in die in den Fig. 7 und 8 und in Fig. 3 links dargestellte Freigabestellung verschoben wird.

Durch diese Verschiebung des Spannkolbens 136 kommt die Spannschulter 176 des Spannkolbens 136 außer Eingriff mit den Arretierkörpern 138, so dass die Arretierkörper 138 nicht mehr in ihrer Arretierposition festgehalten werden.

Wenn nun der Wechselkörper 108 - beispielsweise aufgrund der Einwirkung der Schwerkraft oder aufgrund eines ebenfalls von der Bedienungsperson auf die Begrenzungsfläche 116 des Wechselkörpers 108 ausgeübten mechanischen Drucks - der Bewegung der Betätigungselemente 170 und der Spannkolben 136 der Arretiervorrichtungen 106 in Richtung auf den Grundkörper 104 zu folgt, so werden die Arretierkörper 138 von den Hinterschneidungsabschnitten 142 der Spannhülsen 110 radial nach innen, das heißt zu der Längsmittelachse 148 der jeweiligen Arretiervorrichtung 106 hin, verdrängt, so dass die Arretierkörper 138 zur Anlage an dem verjüngten Abschnitt 190 des Spannkolbens 136 kommen und der Hinterschneidungsabschnitt 142 der jeweiligen Spannhülse 110 die Arretierkörper 138 passieren kann, bis der Wechselkörper 108 mit seiner Anlagefläche 114 an der Spannfläche 112 des Grundkörpers 104 der Spannvorrichtung 102 anliegt.

Wenn dies der Fall ist, entlastet die Bedienungsperson die Betätigungselemente 170 der Arretiervorrichtungen 106 von der Betätigungskraft, wodurch die Spannkolben 136 der Arretiervorrichtungen 106 von der in den Fig. 7 und 8 und in Fig. 3 links dargestellten Freigabestellung wieder in die in den Fig. 4 bis 6 und in Fig. 3 rechts dargestellte Spannstellung bewegt werden.

Während der Überführung von der Freigabestellung in die Spannstellung verdrängt die Spannschulter 176 jedes Spannkolbens 136 die jeweils zugeordneten Arretierkörper 138 von der Freigabeposition radial nach außen in die Arretierposition, in welcher die Arretierkörper 138 an der Andrückfläche 140 der jeweils zugeordneten Spannhülse 110 anliegen und den Hinterschneidungsabschnitt 142 der Spannhülse 110 untergreifen, so dass die Spannhülsen 110 und damit der Wechselkörper 108 durch Formschluss gegen ein Wegbewegen von dem Grundkörper 104 gesichert sind.

In dieser eingespannten Stellung des Wechselkörpers 108 sind die Spannhülsen 110 durch Anliegen an den Umfangsseiten der Betätigungselemente 170 positioniert, und die Betätigungselemente 170 sind in den jeweils zugeordneten Spannhülsen 110 längs der Längsmittelachse 148 der jeweiligen Arretiervorrichtung 106 verschieblich geführt.

Um den Wechselkörper 108 wieder von dem Grundkörper 104 der Spannvorrichtung 102 abzunehmen, werden die Arretiervorrichtungen 106 von der Bedienungsperson durch Ausüben einer Betätigungskraft auf die Betätigungselemente 170 wieder in die Freigabestellung überführt, in welcher die Arretierkörper 138 von den Hinterschneidungsabschnitten 142 der Spannhülsen 110 radial nach innen in die Freigabeposition bewegbar sind, wodurch die Hinterschneidungsabschnitte 142 der Spannhülsen 110 an den Arretierkörpern 138 vorbei bewegt werden können und der Wechselkörper 108 in der Verschiebungsrichtung 202 von der Spannfläche 112 des Grundkörpers 104 der Spannvorrichtung 102 abgenommen werden kann.

Statt durch eine menschliche Bedienungsperson kann die Betätigung der Betätigungselemente 170 auch durch eine Maschine, insbesondere einen Roboter, erfolgen.

Eine in Fig. 9 dargestellte zweite Ausführungsform einer Kombination 100 aus einer Spannvorrichtung 102 und einem daran eingespannten Wechselkörper 108 unterscheidet sich von der in den Fig. 1 bis 8 dargestellten ersten Ausführungsform dadurch, dass die Spannvorrichtung 102 eine größere Anzahl von Arretiervorrichtungen 106, beispielsweise vier Arretiervorrichtungen 106, und der Wechselkörper 108 eine entsprechend größere Anzahl von Spannhülsen 110, beispielsweise vier Spannhülsen 110, aufweist.

Um auch bei der größeren Anzahl von Arretiervorrichtungen 106 dennoch alle Arretiervorrichtungen 106 der Spannvorrichtung 102 gleichzeitig mit einer Betätigungskraft beaufschlagen zu können, ist der Wechselkörper 108 bei dieser Ausführungsform mit einer oder mehreren Betätigungshilfen 204, beispielsweise in Form von Betätigungsleisten 206, versehen.

Jede Betätigungshilfe 204 ist vorzugsweise unverlierbar an dem Wechselkörper 108 gehalten.

Insbesondere kann vorgesehen sein, dass die Betätigungshilfe 204, vorzugsweise mittels eines Scharniers 208, um eine Schwenkachse 210 schwenkbar an dem Wechselkörper 108 angelenkt ist.

Dabei kann die Schwenkachse 210 vorzugsweise im Wesentlichen parallel zu der Begrenzungsfläche 116 und/oder im Wesentlichen parallel zu der Anlagefläche 114 des Wechselkörpers 108 ausgerichtet sein.

Jede Betätigungshilfe 204 weist einen Betätigungsbereich 212 auf, welcher bei Verwendung der Betätigungshilfe 204 eine Betätigungskraft auf ein Betätigungselement 170 einer Arretiervorrichtung 106 oder mehrere Betätigungselemente 170 verschiedener Arretiervorrichtungen 106 ausübt, und einen Kraftaufnahmebereich 214, welcher von einer Bedienungsperson mit einer Betätigungskraft beaufschlagt werden kann.

Wenn der Betätigungsbereich 212 der Betätigungshilfe 204 von der Schwenkachse 210 einen größeren Abstand aufweist als der Kraftaufnahmebereich 214, wird die von der Bedienungsperson auf den Kraftaufnahmebereich 214 aufgebrachte Betätigungskraft durch Hebelwirkung verstärkt von dem Betätigungsbereich 212 auf die Betätigungselemente 170 der Arretiervorrichtungen 106 übertragen, was die Betätigung der Arretiervorrichtungen 106 mittels der Betätigungshilfe 204 erleichtert.

Die Betätigungshilfe 204 ermöglicht es, beim Einspannen des Wechselkörpers 108 und/oder beim Lösen des Wechselkörpers 108 von dem Grundkörper 104 der Spannvorrichtung 102 mehrere Arretiervorrichtungen 106 gleichzeitig von der Spannstellung in die Freigabestellung zu überführen, ohne dass hierfür eine entsprechend große Anzahl von Fingern der Bedienungsperson eingesetzt werden muss; vielmehr ist es möglich, durch Ausüben einer Betätigungskraft mittels eines Fingers einer Bedienungsperson auf den Kraftaufnahmebereich 214 der Betätigungshilfe 204 die Betätigungselemente 170 mehrerer Arretiervorrichtungen 106 gleichzeitig mit einer Betätigungskraft zu beaufschlagen.

Im Übrigen stimmt die in Fig. 9 dargestellte zweite Ausführungsform einer Kombination 100 aus einer Spannvorrichtung 102 und einem Wechselkörper 108 hinsichtlich Aufbau, Funktion und Herstellungsweise mit der in den Fig. 1 bis 8 dargestellten ersten Ausführungsform überein, auf deren vorstehende Beschreibung insoweit Bezug genommen wird.

## Patentansprüche

1. Spannvorrichtung zum Einspannen eines Wechselkörpers (108) an einem Grundkörper (104) der Spannvorrichtung (102), umfassend den Grundkörper (104) und mindestens eine Arretiervorrichtung (106) zum Arretieren einer an dem Wechselkörper (108) angeordneten Spannhülse (110) relativ zu dem Grundkörper (104),
wobei die Arretiervorrichtung (106) ein Gehäuse (144), einen in dem Gehäuse (144) zwischen einer Spannstellung und einer Freigabestellung beweglich geführten Spannkolben (136) und mindestens einen Arretierkörper (138) umfasst, der mittels des Spannkolbens (136) von einer Freigabeposition, in welcher der Arretierkörper (138) ein Wegbewegen der Spannhülse (110) von dem Grundkörper (104) freigibt, in eine Arretierposition, in welcher der Arretierkörper (138) ein Wegbewegen der Spannhülse (110) von dem Grundkörper (104) verhindert, bewegbar ist, wobei der Spannkolben (136) mit einem Betätigungselement (170) gekoppelt ist, welches von außerhalb des Gehäuses (144) der Arretiervorrichtung (106) mit einer Betätigungskraft beaufschlagbar ist, durch deren Einwirkung auf das Betätigungselement (170) der Spannkolben (136) von der Spannstellung in die Freigabestellung verschiebbar ist, und
wobei das Betätigungselement (170) mechanisch von Hand oder mittels einer Maschine, die eine mechanische Kraft auf das Betätigungselement (170) überträgt, mit der Betätigungskraft beaufschlagbar ist,
**dadurch gekennzeichnet,**
**dass** das Gehäuse (144) der Arretiervorrichtung (106) unverlierbar an dem Grundkörper (104) gehalten ist und
**dass** ein dem Betätigungselement (170) zugewandter Endbereich (178) des Gehäuses (144) einen Arretierkörperkäfig (180) zur Aufnahme von mehreren Arretierkörpern (138) bildet.

2. Spannvorrichtung nach Anspruch 1, **dadurch gekennzeichnet, dass** das Betätigungselement (170) eine Betätigungsfläche (200) aufweist, wobei durch Ausüben eines Druckes von außerhalb des Gehäuses (144) auf die Betätigungsfläche (200) der Spannkolben (136) von der Spannstellung in die Freigabestellung verschiebbar ist.

3. Spannvorrichtung nach einem der Ansprüche 1 oder 2, **dadurch gekennzeichnet, dass** der Spannkolben (136) mittels des Betätigungselements (170) werkzeugfrei von der Spannstellung in die Freigabestellung verschiebbar ist.

4. Spannvorrichtung nach einem der Ansprüche 1 bis 3, **dadurch gekennzeichnet, dass** der Spannkolben (136) mittels des Betätigungselements (170) im Wesentlichen geradlinig von der Spannstellung in die Freigabestellung verschiebbar ist.

5. Spannvorrichtung nach einem der Ansprüche 1 bis 4, **dadurch gekennzeichnet, dass** das Betätigungselement (170) eine Anlagefläche (172) aufweist, mit welcher das Betätigungselement (170) an dem Gehäuse (144) anliegt, wenn der Spannkolben (136) sich in der Freigabestellung befindet.

6. Spannvorrichtung nach einem der Ansprüche 1 bis 5, **dadurch gekennzeichnet, dass** die Arretiervorrichtung (106) ein elastisches Element (152) umfasst, welches den Spannkolben (136) in die Spannstellung vorspannt.

7. Spannvorrichtung nach Anspruch 6, **dadurch gekennzeichnet, dass** die Arretiervorrichtung (106) ein Abstützelement (150) umfasst, an welchem das elastische Element (152) sich abstützt.

8. Spannvorrichtung nach einem der Ansprüche 6 oder 7, **dadurch gekennzeichnet, dass** die Arretiervorrichtung (106) ein Rückhalteelement (151) umfasst, welches das elastische Element (152) und/oder das Abstützelement (150) in dem Gehäuse (144) der Arretiervorrichtung (106) zurückhält.

9. Spannvorrichtung nach einem der Ansprüche 1 bis 8, **dadurch gekennzeichnet, dass** das Betätigungselement (170) in der Spannstellung und/oder in der Freigabestellung des Spannkolbens (136) außerhalb des Gehäuses (144) der Arretiervorrichtung (106) angeordnet ist.

10. Spannvorrichtung nach einem der Ansprüche 1 bis 9, **dadurch gekennzeichnet, dass** das Betätigungselement (170) lösbar an dem Spannkolben (136) gehalten ist.

11. Kombination aus einer Spannvorrichtung (102) nach einem der Ansprüche 1 bis 10 und einem an dem Grundkörper (104) einspannbaren Wechselkörper (108), an dem mindestens eine Spannhülse (110) angeordnet ist.

12. Kombination nach Anspruch 11, **dadurch gekennzeichnet, dass** das Betätigungselement (170) in der Spannhülse (110) verschieblich geführt ist.

13. Kombination nach einem der Ansprüche 11 oder 12, **dadurch gekennzeichnet, dass** das Betätigungselement (170) im eingespannten Zustand des Wechselkörpers (108) über eine dem Grundkörper (104) abgewandte Begrenzungsfläche (116) des Wechselkörpers (108) übersteht, wenn der Spannkolben (136) sich in der Spannstellung befindet.

14. Kombination nach einem der Ansprüche 11 bis 13, **dadurch gekennzeichnet, dass** die Spannvorrichtung (102) mehrere Arretiervorrichtungen (106) umfasst und dass die Kombination (100) mindestens eine Betätigungshilfe (204) umfasst, mittels welcher die Betätigungselemente (170) der mehreren Arretiervorrichtungen (106) gleichzeitig mit einer Betätigungskraft beaufschlagbar sind.

15. Kombination nach Anspruch 14, **dadurch gekennzeichnet, dass** die Betätigungshilfe (204) unverlierbar an dem Wechselkörper (108) oder an dem Grundkörper (104) gehalten ist.

## Claims

1. A clamping device for clamping an interchangeable body (108) to a base body (104) of the clamping device (102), comprising the base body (104) and at least one locking device (106) for locking a clamping sleeve (110) arranged on the interchangeable body (108) relative to the base body (104),
wherein the locking device (106) comprises a housing (144), a clamping piston (136) movably guided in the housing (144) between a clamping position and a release position and at least one locking body (138), which is movable by means of the clamping piston (136) from a release position, in which the locking body (138) enables a movement away of the clamping sleeve (110) from the base body (104), into a locking position, in which the locking body (138) prevents a movement away of the clamping sleeve (110) from the base body (104), wherein the clamping piston (136) is coupled to an actuation element (170), which from outside the housing (144) of the locking device (106) is arranged to be acted upon by an actuation force, through the action of which on the actuation element (170) the clamping piston (136) is displaceable from the clamping position into the release position, and
wherein the actuation element (170) is arranged to be acted upon by the actuation force mechanically by hand or by means of a machine, which transfers a mechanical force to the actuation element (170),
**characterised in that**,
the housing (144) of the locking device (106) is held captively on the base body (104) and
**in that** an end region (178) of the housing (144) facing the actuation element (170) forms a locking body cage (180) for receiving a plurality of locking bodies (138).

2. A clamping device according to claim 1, **characterised in that** the actuation element (170) comprises an actuation face (200), wherein by exertion of a pressure from outside the housing (144) on the actuation face (200) the clamping piston (136) is displaced from the clamping position into the release position.

3. A clamping device according to either of claims 1 or 2, **characterised in that** the clamping piston (136) is displaceable by means of the actuation element (170) in a toolfree manner from the clamping position into the release position.

4. A clamping device according to any of claims 1 to 3, **characterised in that** the clamping piston (136) is displaceable by means of the actuation element (170) substantially in a straight line from the clamping position into the release position.

5. A clamping device according to any of claims 1 to 4, **characterised in that** the actuation element (170) has an abutment face (172), with which the actuation element (170) abuts on the housing (144), when the clamping piston (136) is in the release position.

6. A clamping device according to any of claims 1 to 5, **characterised in that** the locking device (106) comprises an elastic element (152), which biases the clamping piston (136) into the clamping position.

7. A clamping device according to claim 6, **characterised in that** the locking device (106) comprises a support element (150), on which the elastic element (152) is supported.

8. A clamping device according to either of claims 6 or 7, **characterised in that** the locking device (106) comprises a restraining element (151), which holds back the elastic element (152) and/or the support element (150) in the housing (144) of the locking device (106).

9. A clamping device according to any of claims 1 to 8, **characterised in that** the actuation element (170) is arranged outside the housing (144) of the locking device (106) in the clamping position and/or in the release position of the clamping piston (136).

10. A clamping device according to any of claims 1 to 9, **characterised in that** the actuation element (170) is held releasably on the clamping piston (136).

11. A combination of a clamping device (102) according to any of claims 1 to 10 and a clamping body (108) which is clampable on the base body (104) and on which there is arranged at least one clamping sleeve (110).

12. A combination according to claim 11, **characterised in that** the actuation element (170) is guided displaceably in the clamping sleeve (110).

13. A combination according to either of claims 11 or 12, **characterised in that** the actuation element (170) in the clamped state of the interchangeable body (108) projects beyond a limiting face (116) of the interchangeable body (108) facing away from the base body (104), when the clamping piston (136) is in the clamping position.

14. A combination according to any of claims 11 to 13, **characterised in that** the clamping device (102) comprises a plurality of locking devices (106) and **in that** the combination (100) comprises at least one actuation aid (204), by means of which the actuation elements (170) of the plurality of locking devices (106) are arranged to be acted upon simultaneously by an actuation force.

15. A combination according to claim 14, **characterised in that** the actuation aid (204) is held captively on the interchangeable body (108) or on the base body (104).

## Revendications

1. Dispositif de serrage pour enserrer un corps interchangeable (108) sur un corps de base (104) du dispositif de serrage (102), comprenant le corps de base (104) et au moins un dispositif de blocage (106) destiné à bloquer un manchon de serrage (110) disposé sur le corps interchangeable (108) par rapport au corps de base (104),
dans lequel le dispositif de blocage (106) comprend un boîtier (144), un piston de serrage (136) guidé de manière mobile dans le boîtier (144) entre une position de serrage et une position de déblocage et au moins un corps de blocage (138), qui peut être déplacé au moyen du piston de serrage (136) depuis une position de déblocage, dans laquelle le corps de blocage (138) débloque un éloignement du manchon de serrage (110) du corps de base (104), dans une position de blocage, dans laquelle le corps de blocage (138) empêche un éloignement du manchon (110) du corps de base (104), dans lequel le piston de serrage (136) est couplé à un élément d'actionnement (170), lequel peut être soumis à l'action d'une force d'actionnement depuis l'extérieur du boîtier (144) du dispositif de blocage (106), par l'action de laquelle sur l'élément d'actionnement (170), le piston de serrage (136) peut être coulissé depuis la position de serrage dans la position de déblocage,
et
dans lequel l'élément d'actionnement (170) peut être soumis à l'action de la force d'actionnement mécaniquement à la main ou au moyen d'une machine, qui transfère une force mécanique sur l'élément d'actionnement (170),
**caractérisé en ce**
**que** le boîtier (144) du dispositif de blocage (106) est maintenu de manière imperdable sur le corps de base (104), et
**qu'**une zone d'extrémité (178), tournée vers l'élément d'actionnement (170), du boîtier (144) forme une cage de corps de blocage (180) destinée à recevoir plusieurs corps de blocage (138).

2. Dispositif de serrage selon la revendication 1, **caractérisé en ce que** l'élément d'actionnement (170) présente une surface d'actionnement (200), dans lequel en exerçant une pression depuis l'extérieur du boîtier (144) sur la surface d'actionnement (200), le piston de serrage (136) peut être coulissé depuis la position de serrage dans la position de déblocage.

3. Dispositif de blocage selon l'une quelconque des revendications 1 ou 2, **caractérisé en ce que** le piston de serrage (136) peut être coulissé sans outil depuis la position de serrage dans la position de déblocage au moyen de l'élément d'actionnement (170).

4. Dispositif de serrage selon l'une quelconque des revendications 1 à 3, **caractérisé en ce que** le piston de serrage (136) peut être coulissé de manière sensiblement rectiligne depuis la position de serrage dans la position de déblocage au moyen de l'élément d'actionnement (170).

5. Dispositif de serrage selon l'une quelconque des revendications 1 à 4, **caractérisé en ce que** l'élément d'actionnement (170) présente une surface d'appui (172), avec laquelle l'élément d'actionnement (170) repose sur le boîtier (144) lorsque le piston de serrage (136) se trouve dans la position de déblocage.

6. Dispositif de serrage selon l'une quelconque des revendications 1 à 5, **caractérisé en ce que** le dispositif de blocage (106) comprend un élément élastique (152), lequel précontraint le piston de serrage (136) dans la position de serrage.

7. Dispositif de serrage selon la revendication 6, **caractérisé en ce que** le dispositif de blocage (106) comprend un élément de soutien (150), sur lequel l'élément élastique (152) prend appui.

8. Dispositif de serrage selon l'une quelconque des revendications 6 ou 7, **caractérisé en ce que** le dispositif de blocage (106) comprend un élément de retenue (151), lequel retient l'élément élastique (152) et/ou l'élément de soutien (150) dans le boîtier (144) du dispositif de blocage (106).

9. Dispositif de serrage selon l'une quelconque des revendications 1 à 8, **caractérisé en ce que** l'élément d'actionnement (170) est disposé dans la position de serrage et/ou dans la position de déblocage du piston de serrage (136) à l'extérieur du boîtier (144) du dispositif de blocage (106).

10. Dispositif de serrage selon l'une quelconque des revendications 1 à 9, **caractérisé en ce que** l'élément d'actionnement (170) est maintenu de manière amovible sur le piston de serrage (136).

11. Combinaison composée du dispositif de serrage (102) selon l'une quelconque des revendications 1 à 10 et d'un corps interchangeable (108) pouvant être enserré sur le corps de base (104), sur lequel au moins un manchon de serrage (110) est disposé.

12. Combinaison selon la revendication 11, **caractérisée en ce que** l'élément d'actionnement (170) est guidé de manière à pouvoir coulisser dans le manchon de serrage (110).

13. Combinaison selon l'une quelconque des revendications 11 ou 12, **caractérisée en ce que** l'élément d'actionnement (170) dépasse, dans l'état enserré du corps interchangeable (108), d'une surface de délimitation (116), opposée au corps de base (104), du corps interchangeable (108) lorsque le piston de serrage (136) se trouve dans la position de serrage.

14. Combinaison selon l'une quelconque des revendications 11 à 13, **caractérisée en ce que** le dispositif de serrage (102) comprend plusieurs dispositifs de blocage (106), et que la combinaison (100) comprend au moins un système d'aide à l'actionnement (204), au moyen duquel les éléments d'actionnement (170) des plusieurs dispositifs de blocage (106) peuvent être soumis simultanément à l'action d'une force d'actionnement.

15. Combinaison selon la revendication 14, **caractérisée en ce que** le système d'aide à l'actionnement (204) est maintenu de manière imperdable sur le corps interchangeable (108) ou sur le corps de base (104).
